# EUROPEAN PATENT APPLICATION

(11) **EP 4 852 192 A1**
(43) Date of publication of application: **09.12.2026**
(21) Application number: 25880139.8
(22) Date of filing: 29.07.2025
(51) Int. Cl.: H01M 50/342, H01M 50/169, H01M 10/6554, H01M 50/249

(54) **BATTERY CELL, AND BATTERY PACK AND VEHICLE COMPRISING SAME**

(30) Priority: 17.10.2024 KR 20240141948
(71) Applicant: LG Energy Solution, Ltd., Seoul 07335 (KR)
(72) Inventor: JEON, Myeong-Jun, Daejeon 34122 (KR); KIM, Do-Gyun, Daejeon 34122 (KR); KIM, Sung-Hwan, Daejeon 34122 (KR); MOON, Ji-Wook, Daejeon 34122 (KR); CHUNG, Gu-Jin, Daejeon 34122 (KR); JO, Min-Ki, Daejeon 34122 (KR)
(74) Representative: Goddar, Heinz J.
(86) International application number: PCT/KR2025/011252
(87) International publication number: WO 2026/084199

(57) **Abstract**

The present disclosure relates to a battery cell capable of smooth venting within the battery cell under abnormal conditions such as an increase in internal pressure, and a battery pack and a vehicle including the same. The present disclosure provides a battery cell including an electrode assembly in which a first electrode, a second electrode, and a separator interposed therebetween are wound around a winding axis; a battery can accommodating the electrode assembly through an opening formed on one side, having a closed portion formed on the other side, and electrically connected to the second electrode; an electrode terminal electrically connected to the first electrode through a through hole formed in the closed portion of the battery can; and a cap covering the opening of the battery can, wherein the closed portion of the battery can has a vent notch with a fracture structure, and a battery pack and a vehicle including the same.

## Description

### TECHNICAL FIELD

The present disclosure relates to a battery cell, and a battery pack and a vehicle including the same, and more specifically, to a battery cell capable of smooth venting within the battery cell under abnormal conditions such as an increase in internal pressure, and a battery pack and a vehicle including the same.

This application is based on and claims priority from Korean Patent Application No. 10-2024-0141948, filed on October 17, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, when a higher output voltage is required, a plurality of battery cells may be connected in series to form a battery pack. Additionally, depending on the charging and discharging capacity required for the battery pack, a plurality of battery cells may be connected in parallel to form a battery pack. Therefore, the number of battery cells included in the battery pack may be variously set according to the required output voltage and/or the demanded charging and discharging capacity.

Meanwhile, secondary batteries have a wide range of application areas. Among these, battery packs applied to devices such as electric vehicles require large capacity and high output. At this time, when a problem occurs inside the secondary battery to cause internal pressure to rise, a vent structure is typically used to discharge internal gas to the outside, which may reduce the internal pressure. This allows for smooth venting of internal gas within the defective secondary battery, thereby preventing accidents such as explosions caused by a continuous rise in internal pressure.

However, when abnormal chemical reactions occur inside the battery due to overcharge, overdischarge, internal short circuits, or external impacts, venting may not be performed smoothly, thereby leading to thermal runaway in which heat generated inside the secondary battery is not controlled and rapidly increased. Once thermal runaway begins, the temperature of the battery rises uncontrollably fast, and the internal materials of the battery continue to decompose and generate more gas, thereby initiating a vicious cycle. This increases the risk of spontaneous ignition or explosion of the battery.

To prevent this, various safety devices are applied to secondary batteries. For example, structures such as pressure valves or fracture notches are designed to be fractured and discharge gas when internal pressure exceeds a certain level, thereby preventing battery explosions.

However, when structures are positioned around the pressure valves or fracture notches, they may interfere with smooth venting, and the periphery thereof may also be deformed due to fracture of the notch, thereby leading to unexpected accidents.

Therefore, there is a need to develop secondary batteries with a structure capable of smoothly discharging the internal gas of the secondary battery through predictable fracture when internal pressure increases due to a malfunction in the secondary battery.

### DISCLOSURE

### Technical Problem

Therefore, the present disclosure is directed to providing a battery cell having a structure capable of smooth venting, and a battery pack and a vehicle including the same.

Additionally, the present disclosure is directed to providing a battery cell that reduces or prevents deformation of the periphery when a partial configuration of the battery cell for gas discharge is fractured, and a battery pack and a vehicle including the same.

Additionally, the present disclosure is directed to providing a battery cell capable of reducing the internal pressure of the battery cell using a bottom cooling method, and a battery pack and a vehicle including the same.

However, technical problems to be solved by the present disclosure are not limited to the above-described problems, and other problems not mentioned herein may be clearly understood by those skilled in the art from the following description of the present disclosure.

### Technical Solution

To solve the above problem, the present disclosure provides a battery cell including an electrode assembly in which a first electrode, a second electrode, and a separator interposed therebetween are wound around a winding axis; a battery can accommodating the electrode assembly through an opening formed on one side, having a closed portion formed on the other side, and electrically connected to the second electrode; an electrode terminal electrically connected to the first electrode through a through hole formed in the closed portion of the battery can; and a cap covering the opening of the battery can, wherein the closed portion of the battery can has a vent notch with a fracture structure.

The opening of the battery can may be welded together with an edge of the cap.

For example, the closed portion of the battery can may be disposed at the top of the battery can, and the opening of the battery can may be formed at the bottom of the battery can.

The cap may be inserted into the battery can in the length direction from the opening of the battery can and welded together with a side surface of the battery can.

The closed portion of the battery can may include a first surface disposed toward the outside of the battery can; and a second surface disposed toward the inside of the battery can, and the vent notch may include at least one of an upper notch formed concavely by being recessed inward in the thickness direction of the closed portion of the battery can from the first surface and a lower notch formed concavely by being recessed inward in the thickness direction of the closed portion of the battery can from the second surface.

The vent notch may include the upper notch and the lower notch, and the upper notch and the lower notch may have different depths recessed from each surface of the closed portion of the battery can.

The closed portion of the battery can may include a plating layer on at least the second surface, and the thickness of the plating layer may be greater than the recessed depth of the lower notch.

The vent notch may be recessed to have a stepped structure inward in the thickness direction of the closed portion of the battery can, and in the stepped structure, the size of the recessed area exposed to the outside along the recessed depth direction may gradually decrease.

The vent notch may be provided in a closed loop shape.

The vent notches may be formed in plurality radially outward from the center of the opening of the battery can.

Each of the plurality of vent notches may have a different depth or pattern.

The vent notch may include a plurality of curved portions formed along at least a portion of the circumference of the electrode terminal; and a plurality of linear portions respectively connected to the plurality of curved portions and formed radially from the center of the opening of the battery can.

The vent notch may include a protective member.

Additionally, the present disclosure provides a battery pack including at least one of the above-described battery cells.

In the battery pack, a cooling pad may be disposed on the opposite side of a portion where the vent notch of the battery cell is positioned.

For example, the cooling pad may be disposed toward the bottom of the battery cell.

Additionally, the present disclosure provides a vehicle including at least one of the above-described battery packs.

### Advantageous Effects

A battery cell according to various embodiments of the present disclosure, and a battery pack and a vehicle including the same may reduce deformation of the battery cell components and the periphery thereof.

Additionally, a battery cell according to various embodiments, and a battery pack and a vehicle including the same may smoothly vent internal gas using a bottom cooling method.

Additionally, a battery cell according to various embodiments, and a battery pack and a vehicle including the same may extend the life of the battery cell by securing the stability and durability of the battery cell.

However, effects to be obtained by the present disclosure are not limited to the above-described effects, and other technical effects not mentioned herein may be clearly understood by those skilled in the art from the following description of the present disclosure.

### DESCRIPTION OF DRAWINGS

FIG. 1 is a view schematically showing a battery cell according to an embodiment of the present disclosure.
FIG. 2 is a view schematically showing the electrode assembly of the battery cell of FIG. 1.
FIG. 3 is a view for describing the configuration of the electrode assembly according to FIG. 2.
FIG. 4 is a view schematically showing a longitudinal cross-section of the battery cell of FIG. 1.
FIG. 5 is a view for describing a welded portion of the cap of the battery cell of FIG. 1.
FIG. 6 is a view for describing another embodiment of the welded portion of the cap of FIG. 5.
FIG. 7 is a view for describing a vent notch formed in the closed portion of the battery can of the battery cell according to an embodiment of the present disclosure.
FIGS. 8 to 10 are views for describing other embodiments of the vent notch of FIG. 7.
FIG. 11 is a top view schematically showing the vent notch of FIG. 7.
FIG. 12 is a top view schematically showing still another embodiment of the vent notch of FIG. 7.
FIG. 13 is a view for describing a vent notch formed in a closed portion of a battery can of a battery cell according to another embodiment of the present disclosure.
FIG. 14 is a top view schematically showing the vent notch of FIG. 13.
FIG. 15 is a view for describing a vent notch formed in a closed portion of a battery can of a battery cell according to still another embodiment of the present disclosure.
FIG. 16 is a top view schematically showing the vent notch of FIG. 15.
FIG. 17 is a view for describing a state in which the vent notch of FIG. 15 is fractured.
FIG. 18 is a view schematically showing a protective member of the vent notch of the battery can of the battery cell according to an embodiment of the present disclosure.
FIG. 19 is a view schematically showing a battery pack including a battery cell according to an embodiment of the present disclosure.
FIG. 20 is a view for describing a battery cell cooling method of the battery pack of FIG. 19.
FIG. 21 is a view schematically showing a vehicle including the battery pack of FIG. 19.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Meanwhile, terms indicating directions such as upper, lower, left, right, front, and rear may be used in the present disclosure, but these terms are only for convenience of description, and it is obvious to those skilled in the art that the terms may vary depending on the position, arrangement, or rotation of a reference object, or the position of an observer.

The present disclosure may be implemented by each of the following embodiments independently. Furthermore, the present disclosure may be implemented by combining two or more of the following embodiments. Each of the following embodiments may be implemented independently and may also be freely combined with each other.

For convenience of description, the direction along the length direction of the winding axis of the electrode assembly wound in the form of a jelly-roll is referred to as the winding axis direction Z in this specification. And, the direction surrounding the winding axis is referred to as the circumferential direction, and the direction in which the electrode assembly is wound along the winding axis is referred to as the winding direction X. And, the direction moving toward or away from the winding axis is referred to as the radial direction.

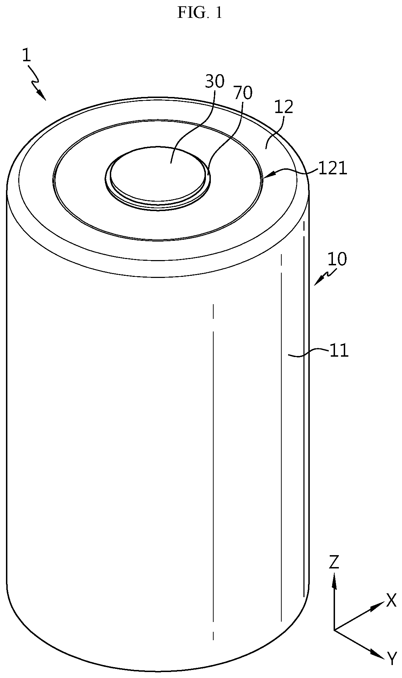

FIG. 1 is a view schematically showing a battery cell 1 according to an embodiment of the present disclosure.

Hereinafter, a battery cell 1 according to various embodiments of the present disclosure will be described in detail.

First, the battery cell 1 may be a cylindrical battery cell. For example, the battery cell 1 may be a cylindrical battery cell having a form factor ratio (defined as a value obtained by dividing a diameter of the cylindrical battery cell by a height, that is, a ratio of the diameter (Φ) to the height H) greater than approximately 0.4.

Here, the form factor may refer to values indicating the diameter and height of the cylindrical battery cell. The cylindrical battery cell may be a 46110 cell, a 48750 cell, a 48110 cell, a 48800 cell, or a 46800 cell, applying numerical values representing the form factor. Here, the first two digits indicate the diameter of the cell, the next two digits indicate the height of the cell, and the last digit 0 indicates that the cell has a circular cross-section.

Additionally, the battery cell 1 may be, for example, a cylindrical battery cell having a form factor ratio (the ratio of the diameter along the radial direction to the height along the mandrel axis direction) greater than approximately 0.4. For example, the diameter of the battery cell 1 may be 40 mm to 50 mm, and the height may be 60 mm to 130 mm. The form factor of the battery cell 1 may be, for example, 46110, 4875, 48110, 4880, or 4680.

However, the shape of the battery cell 1 according to the present disclosure is not limited by the above and may be applied to other types of batteries. For example, it may be applied to a prismatic battery.

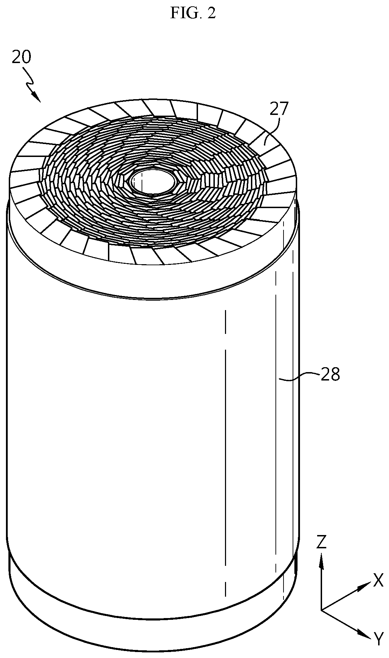

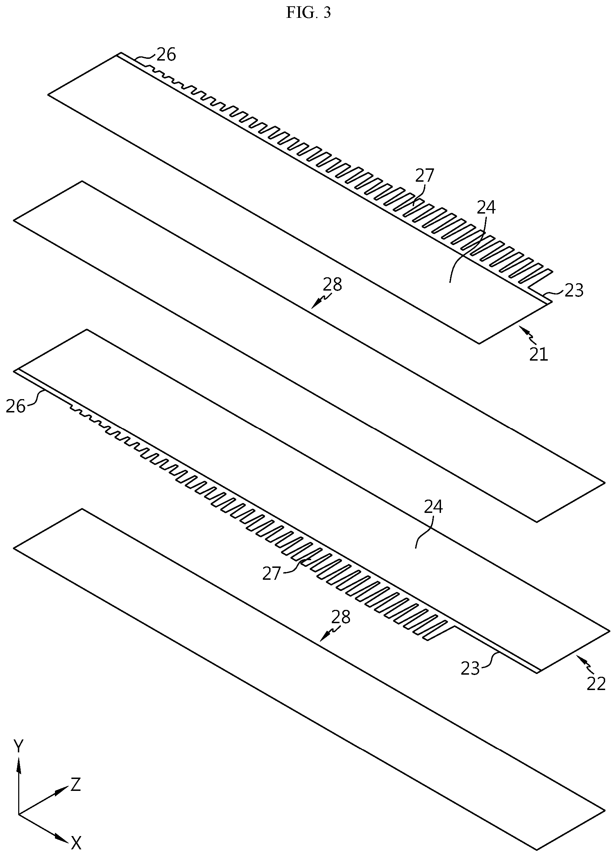

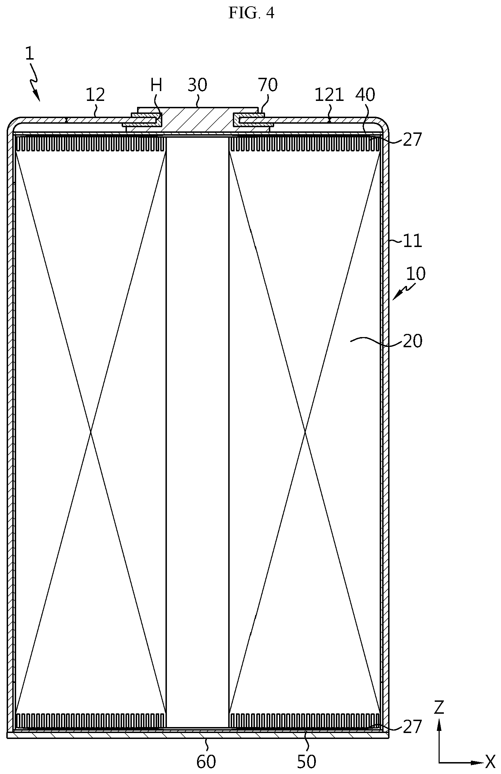

FIG. 2 schematically shows the electrode assembly 20 of the battery cell 1 of FIG. 1, FIG. 3 describes the configuration of the electrode assembly 20 according to FIG. 2, and FIG. 4 schematically shows a longitudinal cross-section of the battery cell 1 of FIG. 1.

Referring to FIGS. 1 to 4, a battery cell 1 according to an embodiment largely includes a battery can 10, an electrode assembly 20, an electrode terminal 30, and a cap 60.

The battery can 10 may have a cylindrical structure for the cylindrical battery cell. At this time, a side wall member 11 may form a cylindrical side surface of the battery can 10, and a bottom member 12 may be connected to the side wall member 11 to form one end of the cylinder. That is, the bottom member 12 becomes a closed portion of the battery can 10, and the other end of the battery can 10 facing the bottom member 12 may be open to become an opening.

The bottom member 12 may have a disk shape with a through hole H formed at the center thereof, and the side wall member 11 may have a cylindrical shape surrounding the bottom member 12 and having a constant radius along the circumferential direction.

The battery can 10 including the bottom member 12 and the side wall member 11 may be a member obtained by molding a metal sheet with nickel plating on the surface of steel by a deep drawing process. Of course, the materials of the bottom member 12 and the side wall member 11 are not limited thereto.

An electrode terminal 30 may be fitted into the through hole H of the bottom member 12. The electrode terminal 30 may be riveted and fixed to the bottom member 12 with a gasket 70 interposed therebetween. The gasket 70 may be interposed between the electrode terminal 30 and the bottom member 12 to seal the inside of the battery can 10 to prevent leakage of the electrolyte, and to electrically insulate the electrode terminal 30 from the bottom member 12.

However, the connection method between the electrode terminal 30 and the bottom member 12 is not limited thereto. For example, as long as the structure is capable of providing sealing between the electrode terminal 30 and the bottom member 12 and electrically insulating the electrode terminal 30 from the bottom member 12, various other fixing methods, such as a bolt-nut coupling method, a glass seal method, or a chrome coating & PP-MAH thermal bonding method, may also be applied.

Thus, the electrode terminal 30 may be electrically connected to a first electrode 21 to be described later to have a first polarity, and the battery can 10 may be electrically connected to a second electrode 22 to be described later to have a second polarity. That is, both the bottom member 12 and the side wall member 11 connected thereto may have the second polarity. Accordingly, in the bottom member 12, both the electrode terminal 30 having the first polarity and the closed portion having the second polarity may be disposed. Thus, the electrode terminal 30 may have a positive polarity, and the closed portion may have a negative polarity. Of course, the opposite may also be true.

The battery cell 1 may accommodate an electrode assembly 20 inside the battery can 10 through the opening of the battery can 10.

The electrode assembly 20 may be configured such that the first electrode 21 and the second electrode 22 and the separator 28 interposed therebetween are wound around a winding axis.

The electrode assembly 20 after winding is completed may have a jelly-roll shape. When viewed from the top or bottom of the electrode assembly 20 in the XY plane, the outer shape of the electrode assembly 20 along the circumferential direction is circular. The structure of the electrode assembly 20 is not limited by the embodiment, and may have a winding structure well known in the art. Each of the first electrode 21, the second electrode 22, and the separator 28 may be formed to have a predetermined width along the winding axis direction Z and extend to a predetermined length along the winding direction X. The first electrode 21 may be a positive electrode plate, and the second electrode 22 may be a negative electrode plate. Of course, the opposite may also be true.

The first electrode 21 and the second electrode 22 may be manufactured in a sheet form. The first electrode 21 and the second electrode 22 may be configured in a form in which an active material layer is applied to at least a portion of the surface of a metal foil 23. The first electrode 21 and the second electrode 22 may have a coated portion 24 region where the active material layer is applied and an uncoated portion 26 region where the active material layer is not applied.

The uncoated portion 26 is exposed to the outside of the separator 28 while forming a plurality of winding turns based on the winding axis of the electrode assembly 20 and may itself be used as an electrode tab. That is, the positive electrode plate and the negative electrode plate may each include the uncoated portion 26 where an active material is not coated at the end of long side in the winding axis direction Z. And, the uncoated portions 26 of the first electrode 21 and the second electrode 22 may be configured to face opposite directions in the winding axis direction Z. The uncoated portion 26 of the first electrode 21 may be accommodated inside the battery can 10 so as to be positioned at one end in the winding axis direction Z, and the uncoated portion 26 of the second electrode 22 may be accommodated inside the battery can 10 so as to be positioned at the other end in the winding axis direction Z. Here, the positive electrode active material coated on the positive electrode plate and the negative electrode active material coated on the negative electrode plate may be used without limitation as long as they are active materials known in the art.

And, the separator 28 may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof. As another example, the separator may be a conventional porous nonwoven fabric, for example, a nonwoven fabric made of high melting point glass fiber, polyethylene terephthalate fiber, and the like.

At least one surface of the separator 28 may include a coating layer of inorganic particles. Additionally, the separator 28 itself may be formed of a coating layer of inorganic particles. The particles constituting the coating layer may have a structure coupled to a binder so that an interstitial volume exists between adjacent particles.

The uncoated portion 26 may itself function as an electrode tab.

The uncoated portion 26 may form a plurality of flag-shaped notching tabs 27 by forming notches at predetermined intervals along the winding direction X. The plurality of notching tabs 27 may be in an equilateral trapezoidal shape arranged along the winding direction X. However, they are not limited thereto, and may be formed in various shapes such as a semicircle, a semi-ellipse, a triangle, a rectangle, a parallelogram, and the like.

Additionally, the plurality of notching tabs 27 may have the same width along the winding direction X. However, the width of the plurality of notching tabs 27 may be gradually or stepwise widening along the winding direction X from the mandrel side, which is the point where winding of the electrode assembly 20 begins, to the outer circumferential side, which is the outermost point after winding.

Additionally, the plurality of notching tabs 27 may be configured such that the heights of the notching tabs 27 stepwise increase along the winding axis direction Z from the mandrel side toward the outer circumferential side. However, the heights of the plurality of notching tabs 27 may be implemented constant or gradually decreasing.

Additionally, the plurality of notching tabs 27 may be bent radially and flattened in the electrode assembly 20. Additionally, the notching tabs 27 may be bent radially inward or outward in the electrode assembly 20.

Additionally, the plurality of notching tabs 27 may be bent one by one during the process of forming a jelly-roll type electrode assembly 20. Alternatively, the notching tabs 27 may be bent all at once after forming the jelly-roll type electrode assembly 20.

In this way, the notching tabs 27 of the first electrode 21 and the notching tabs 27 of the second electrode 22 that are bent radially and overlapped may each provide a plane substantially perpendicular to the axial direction at both ends of the electrode assembly 20 in the axial direction.

At least one end of the electrode assembly 20 in the winding axis direction Z may be electrically connected to current collector plates 40, 50. At this time, the electrode terminal 30 may be connected to the first current collector plate 40 electrically connected to the first electrode 21.

The first current collector plate 40 and the second current collector plate 50 may each be bonded to a substantially flat surface provided by bending the notching tabs 27 exposed at both ends of the electrode assembly 20 in the winding axis direction Z. The first current collector plate 40 may be a positive electrode current collector plate made of aluminum, and the second current collector plate 50 may be a negative electrode current collector plate made of copper. However, the materials of the current collector plates 40, 50 need not be limited thereto. Additionally, the current collector plates 40, 50 may be manufactured by punching, trimming, piercing, and bending a metal sheet, and the manufacturing method is not limited thereto.

The cap 60 may be configured to cover the opening of the battery can 10.

That is, the cap 60 may be configured as a cover structure effectively sealing the opening of the battery can 10. This may ensure the sealability of the battery cell 1, protect the internal electrolyte and electrode assembly 20 from the external environment, and maintain the long-term performance of the battery cell 1. The coupling point between the opening of the battery can 10 and the cap 60 may be coupled by welding. For example, the cap 60 may be coupled to the battery can 10 using butt welding. Therefore, the battery cell 1 may increase the internal capacity in the same outer shape compared to a battery cell formed by beading and crimping methods. Therefore, the energy density of the battery cell 1 may be increased. However, it is obvious that the battery can 10 and the cap 60 may be coupled by a coupling form other than welding, and the coupling form is not limited thereto.

The cap 60 may be mainly made of a metallic material for electrical connection with the second current collector plate 50. Therefore, the cap 60 may have conductivity. For example, the cap 60 may include an aluminum material.

The thickness of the cap 60 may be approximately 0.5 mm or more and 2 mm or less. For example, the thickness of the cap 60 may be approximately 1 mm.

The cap 60 may have a disk shape to be fixed to the opening of the battery can 10 or to seal the opening of the can, but the shape thereof is not limited thereto. Additionally, the thickness of the cap 60 may be designed to provide sufficient strength to prevent deformation in high-temperature or high-pressure environments and to secure durability to prevent leakage of the internal electrolyte.

However, such a battery cell 1 is a high-power battery or a high-density energy battery, and may generate excessive heat during use. This may cause abnormal chemical reactions inside the battery cell 1, resulting in an abnormal increase in internal pressure. That is, if this heat is not properly managed, it may lead to deterioration of cell performance, shortened life, and even safety issues.

Accordingly, the battery cell 1 may have a cooling structure to be described later. This cooling structure effectively releases heat generated inside the battery cell 1, which may play an important role in maintaining overall performance and life.

The cooling structure of the battery cell 1 may be designed at various positions, such as largely the top, side, and bottom, and the thermal management method may vary depending on each position. Among these, a bottom cooling structure may be a method in which a cooling flow path or heat exchange device is disposed at the bottom of the battery cell 1, that is, the bottom portion where the battery cells 1 are stacked or disposed.

This bottom cooling structure may improve overall performance and safety while maximizing the thermal management efficiency of the battery cell 1. Heat generated during use naturally conducts downward, and thus by arranging the cooling structure at the bottom of the battery cell 1, the internal heat removal path may be minimized, and heat may be released faster and more efficiently.

In addition, in the design of a battery using a bottom cooling structure for efficient heat release at the bottom of the cell, it is preferable in terms of securing safety to design an internal gas discharge path at the top of the battery cell 1 to prevent thermal runaway of the battery cell 1 and control the internal pressure.

Accordingly, as illustrated in FIG. 4, the battery cell 1 according to an embodiment of the present disclosure is configured such that a vent notch 121 is formed in the closed portion where the electrode terminal 30 is disposed above the battery can 10. That is, the vent notch 121 may be designed on the top of the battery cell 1 together with a rivet structure riveted to the through hole H of the closed portion of the battery can 10.

The vent notch 121 is configured to be opened at a pressure set along the designed fracture structure. Thus, when the internal pressure of the battery can 10 is greater than or equal to the fracture pressure, the vent notch 121 may fracture to discharge internal gas upward, thereby preventing the explosion of the battery cell 1.

Therefore, the battery cell 1 according to an embodiment of the present disclosure may use the bottom cooling structure by having the vent notch 121 formed in the battery can 10 rather than the cap 60 of the battery cell 1. Thus, the battery cell 1 may optimize thermal management at the bottom of the battery cell 1, and when an abnormal condition occurs due to excessive internal pressure inside the battery can 10, the vent notch 121 fractures toward the upper direction of the battery cell 1, thereby enabling the smooth venting of internal gas. This may prevent thermal runaway by controlling internal pressure while maintaining the temperature distribution within the battery cell 1 more quickly and efficiently.

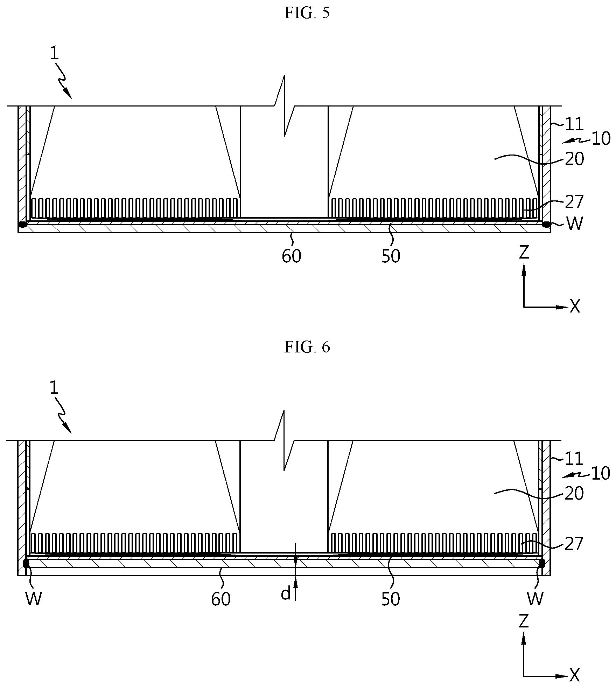

FIG. 5 is a view for describing a welded portion W of the cap 60 of the battery cell 1 of FIG. 1, and FIG. 6 is a view for describing another embodiment of the welded portion W of the cap of FIG. 5.

Referring to FIG. 5, the opening of the battery can 10 may be formed at the bottom of the battery can 10 and welded together with the edge of the cap 60. The cap 60 may be provided to contact the end of the opening of the battery can 10. That is, the diameter of the cap 60 in the circumferential direction may be substantially the same as the diameter of the outer circumferential surface of the battery can 10.

Thus, by welding along the circumference of the portion where the edge of the cap 60 contacts the battery can 10, the welded portion W may be positioned on the side part along the circumferential direction, rather than the bottom of the battery cell 1. As a result, while maintaining a part where the bottom cooling device of the battery cell 1 and the battery cell 1 contact each other to be substantially flat, it is possible to protect the interior of the battery cell 1 and maintain isolation from the external environment.

Additionally, referring to FIG. 6, the cap 60 may be inserted inward from the opening of the battery can 10 toward the top in the winding axis direction Z. For example, the cap 60 may be inserted inward by a certain length (d) toward the top in the winding axis direction Z from the opening of the battery can 10. To this end, the diameter of the cap 60 along the circumferential direction may be substantially the same as or slightly larger than the diameter of the inner circumferential surface of the battery can 10. Thus, the cap 60 is forcibly fitted into the opening of the battery can and welded together with the side surface of the battery can 10, so that the welded portion W may be positioned at the inner side the battery can 10 rather than at the bottom of the battery cell 1. As a result, while maintaining a part where the bottom cooling device of the battery cell 1 and the battery cell 1 contact each other to be substantially flat, it is possible to protect the interior of the battery cell 1 and maintain isolation from the external environment.

Hereinafter, various embodiments of the vent notch 121 of the present disclosure for preventing thermal runaway within the battery cell 1 under abnormal conditions such as an increase in internal pressure will be described.

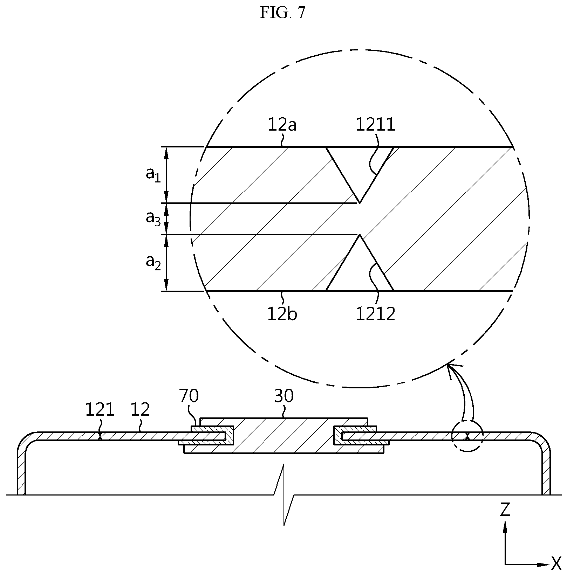

FIG. 7 is a view for describing a vent notch 121 formed in the closed portion of the battery cell 1 according to an embodiment of the present disclosure.

Referring to FIG. 7, the vent notch 121 may be formed in the closed portion disposed on the top of the battery can 10. The closed portion of the battery can 10 is provided on the bottom member 12 of the battery can 10, as described above. Accordingly, the closed portion of the battery can 10 may have a substantially disk shape, and may include a first surface 12a that is an upper surface and a second surface 12b that is a lower surface based on the winding axis direction Z.

The first surface 12a may be disposed toward the outside of the battery can 10, and the second surface 12b may be disposed toward the inside of the battery can 10, as the lower surface based on the first surface 12a and the winding axis direction Z.

The vent notch 121 is configured such that the closed portion of the battery can 10 is partially recessed along the winding axis direction Z to reduce the thickness thereof, but not to completely remove and maintain a predetermined thickness. At this time, the thin portion left after processing has a strength sufficient to withstand the internal pressure of the battery can 10 until it increases, and the vent notch 121 may be designed to gradually fracture starting from the thinnest portion when the internal pressure reaches a threshold. This fracture leads to gradual separation rather than a sudden explosion, and may undergo a process of stably discharging the internal gas of the battery cell 1 to the outside.

The shape of the vent notch 121 may be designed in various ways to allow for precise pressure control. The drawings illustrated in the present disclosure exemplify a shape having a triangular cross-section, but it may be configured to have, for example, microscopic semicircular or U-shaped grooves, or a polygonal pattern, to predictably induce fracture. This shape may be modified depending on the material and thickness of the battery can 10 in the processing process, and may be applied differently in accordance with the intended use and required safety.

Additionally, the recessed depth of the vent notch 121 formed along the winding axis direction Z may be designed in consideration of the thermal stress distribution in the corresponding part to minimize metal deformation that may occur during the process of molding the vent notch 121 into the closed portion of the battery can 10. For example, a rivet structure where the electrode terminal 30 is riveted may be provided in the through hole H formed in the closed portion of the battery can 10, and the rivet structure and the first current collector plate 40 may be bonded by welding. This welded portion may be sensitive to thermal stress. To this end, the recessed depth of the vent notch 121 may be optimized so that the corresponding welded portion is not subjected to excessive stress.

The vent notch 121 may include at least one of an upper notch 1211 and a lower notch 1212. The upper notch 1211 and the lower notch 1212 may be formed to induce fracture of the secondary battery and to be recessed by a constant thickness along the winding axis direction Z from the first surface 12a or the second surface 12b of the closed portion of the battery can 10.

The upper notch 1211 may be formed concavely by being recessed inward in the thickness direction of the closed portion of the battery can 10 from the first surface 12a. Additionally, the lower notch 1212 may be formed concavely by being recessed inward in the thickness direction of the closed portion of the battery can 10 from the second surface 12b.

The battery cell 1 according to an embodiment may include both the upper notch 1211 and the lower notch 1212 in the closed portion of the battery can 10.

Thus, the notch structure where the vent notches are recessed along the winding axis direction Z from both surfaces 12a, 12b of the closed portion of the battery can 10 may be fractured in a more precise and predictable manner. Unlike the traditional notch structure where the vent notch is recessed only from a single surface, this method allows for more precise control of the fracture pressure because the vent notches 121 are recessed from both surfaces 12a, 12b.

Therefore, in the battery cell 1 according to an embodiment of the present disclosure, the vent notches 121 are respectively recessed from both surfaces 12a, 12b of the closed portion of the battery can 10 along the winding axis direction Z, and thus, compared to the notch structure where the vent notch is recessed only from a single surface, the notch press depth required to form the vent notch 121 may be reduced, thereby reducing or preventing deformation of the vent notch 121 or the periphery thereof. Additionally, by being designed to induce fracture while dispersing force both inside and outside the battery can 10, it is possible to rapidly induce fracture upon reaching a specific pressure, while maintaining the strength and stability of the battery can 10.

At this time, the upper notch 1211 and the lower notch 1212 may be formed to have the same depth (a1, a2) in the winding axis direction Z. Thus, due to the structure formed by being recessed to the same depth from both surfaces 12a, 12b of the closed portion of the battery can 10, the thickness (a3) uniformly thinned inward in the thickness direction of the closed portion of the battery can 10 enables fracture to proceed in a more uniform and predictable manner. Additionally, since stress is symmetrically distributed along the winding axis direction Z, the durability of the battery can 10 may be maintained until fracture occurs, and the impact during the fracture process may be minimized.

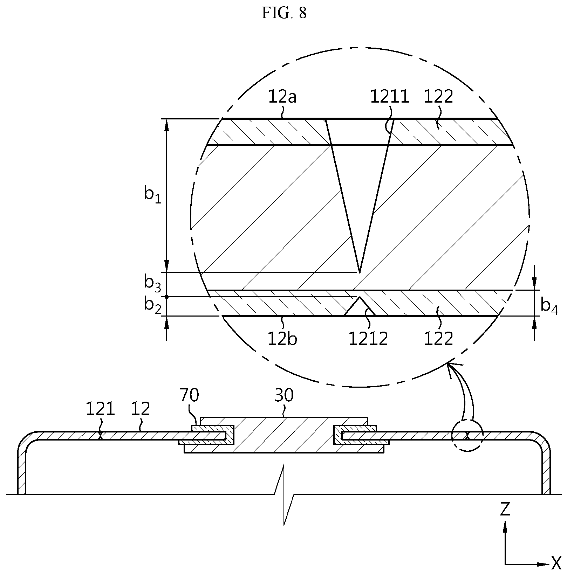

FIGS. 8 to 10 are views for describing other embodiments of the vent notch 121 of FIG. 7. Referring to FIGS. 8 to 10, in a battery cell 1 according to another embodiment of the present disclosure, the recessed depths of the upper notch 1211 and the lower notch 1212 may differ from each other.

First, as illustrated in FIG. 8, the closed portion of the battery can 10 may include a plating layer 122 on at least one of the first surface 12a and the second surface 12b.

The battery can 10 is mainly made of a metal material, and by forming the plating layer 122 on this metal surface, it is possible to protect the battery cell 1 from the external environment and minimize reaction with the electrolyte inside the battery can 10. Thus, the plating layer 122 may significantly contribute to the corrosion resistance, electrical performance, and mechanical strength of the battery cell 1, and particularly may serve to suppress reactivity with the electrolyte. When the inner surface of the battery can 10 is directly exposed to the electrolyte, corrosion may occur due to a chemical reaction between the metal and the electrolyte, but the plating layer 122 may block this reaction, thereby extending the life of the battery cell 1. For example, the metal may be steel, and the plating layer 122 may be a nickel layer.

Accordingly, the battery cell 1 according to the present embodiment may be configured such that the vent notch 121 for preventing thermal runaway is formed in the closed portion of the battery can 10, and the plating layer 122 for minimizing reaction with the electrolyte inside the battery can 10 is not removed or damaged.

For example, the lower notch 1212 may be recessed to a depth (b2) shallower than the thickness (b4) of the plating layer 122 along the winding axis direction Z so that the plating layer 122 is included on at least the second surface 12b of the closed portion of the battery can 10 and is not removed or damaged. That is, the thickness of the plating layer 122 may be greater than the recessed depth of the lower notch 1212 and less than the recessed depth (b1) of the upper notch 1211. Thus, while minimizing the reaction between the closed portion of the battery can 10 and the internal electrolyte of the battery can 10, when an abnormal condition occurs in the battery cell 1, the resulting increase in internal pressure may push out the portion processed to a thin thickness (b3) of the vent notch 121, thereby causing fracture.

Therefore, the battery cell 1 according to the present embodiment improves corrosion resistance, electrical contact characteristics, mechanical strength, and the like due to the plating layer 122, while enabling smooth venting due to the vent notch 121.

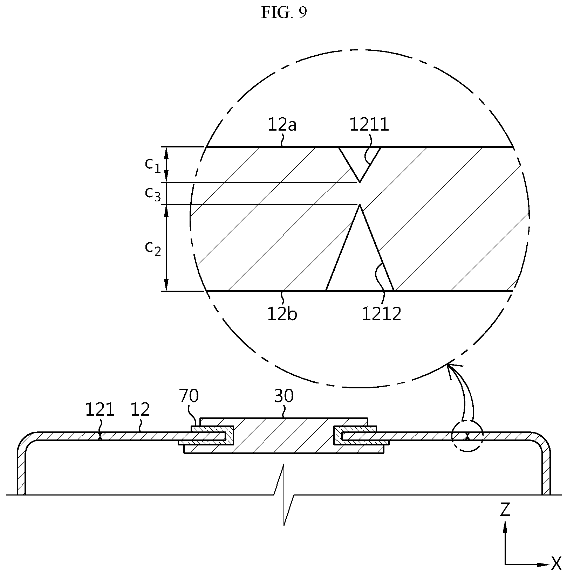

Additionally, as another example, as illustrated in FIG. 9, in the battery cell 1 according to the present embodiment, the recessed depth (c1) of the upper notch 1211 along the winding axis direction Z may be smaller than the recessed depth (c2) of the lower notch 1212. Thus, stress may be concentrated on the lower notch 1212 formed relatively large due to internal pressure, thereby facilitating fracture. Accordingly, when the thickness (c3) between the upper notch 1211 and the lower notch 1212 is sufficiently thinned, a local fracture occurs in the vent notch 121 of the battery can 10, which may prevent deformation of the periphery, thereby minimizing damage to the battery cell 1.

Therefore, the battery cell 1 according to the present embodiment may be configured to more easily fracture at a specific point to secure a smooth discharge path for internal gas G when structures are positioned around pressure valves or the vent notch 121. This may provide the effect of improving overall safety by minimizing damage to other parts of the battery can 10 and designing it to allow for predictable venting.

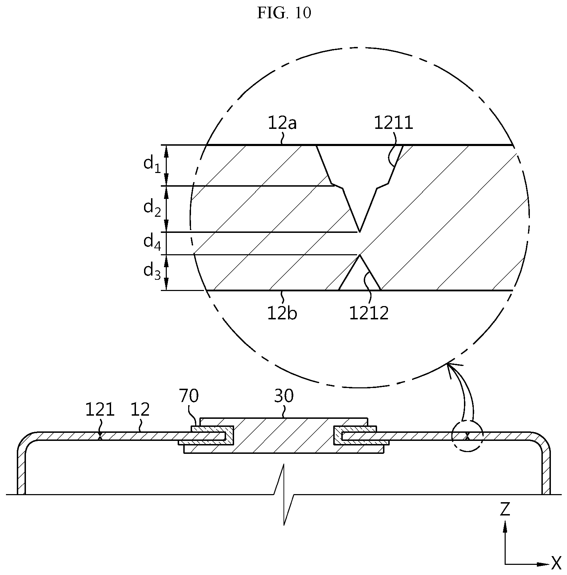

Additionally, as another example, as illustrated in FIG. 10, in the battery cell 1 according to the present embodiment, the vent notch 121 may be recessed to have a stepped structure inward in the thickness direction from the surface of the closed portion of the battery can 10 along the winding axis direction Z. At this time, the stepped structure may be configured such that the area of the recessed region exposed to the outside from the upper surface of the battery can 10 gradually decreases at a depth recessed from the surface along the winding axis direction Z.

Thus, the fracture of the vent notch 121 may be controlled by effectively dispersing stress across multiple stages, thereby preventing sudden deformation of the periphery. This multi-stage vent notch 121 is designed to be fractured in stages as internal pressure increases, so that the internal pressure may be gradually relieved through each step of the vent notch 121.

In the vent notch 121, at least one of the upper notch 1211 and the lower notch 1212 may have a step structure as described above. For example, the vent notch 121 may be recessed from the first surface 12a by a predetermined depth (d1) along the winding axis direction Z, thereby forming a primary recessed portion having a large recessed area exposed to the outside. By forming a secondary recessed portion recessed from this point by a predetermined depth (d2) along the winding axis direction Z and having a relatively narrow recessed area, the upper notch 1211 having a secondary multi-stage structure may be provided. At this time, the lower notch 1212 of various shapes recessed from the second surface 12b by a predetermined depth (d3) along the winding axis direction Z may be further included. Thus, by reducing the processing depth of the upper notch 1211 along the winding axis direction Z to form a fracture portion having a predetermined thickness (d4), deformation of the periphery of the vent notch 121 may be further prevented.

Therefore, the battery cell 1 according to the present embodiment enables gradual pressure relief occurring in several stages, rather than one-time pressure relief resulting from the fracture of the vent notch 121, thereby efficiently discharging internal gas. Additionally, the stepped structure may provide the effect of improving overall strength by dispersing the energy generated during fracture in a timely and stepwise manner to minimize damage to other parts of the battery can 10.

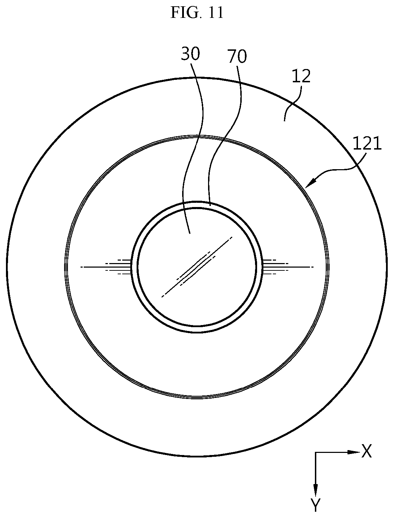

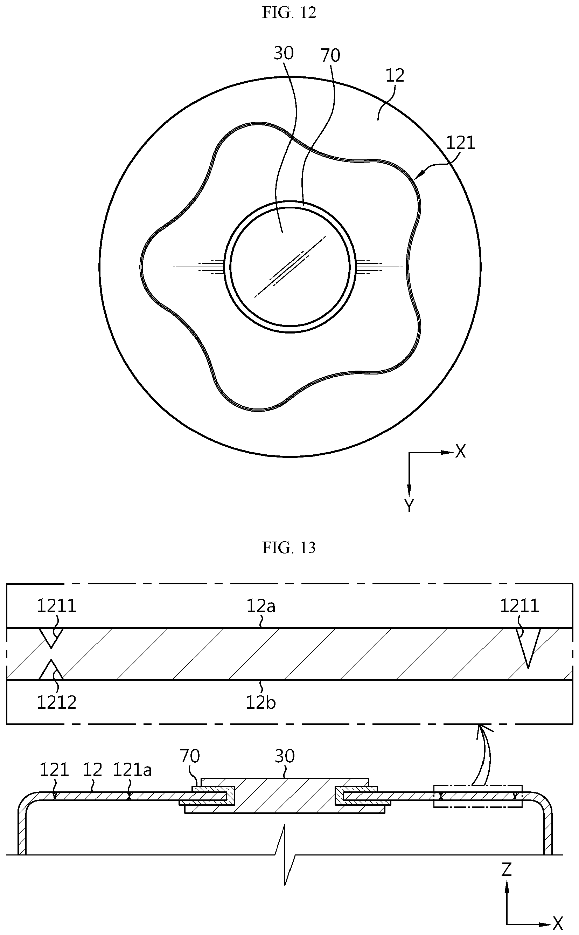

FIG. 11 is a top view schematically showing the vent notch 121 of FIG. 7, and FIG. 12 is a top view schematically showing another embodiment of the vent notch 121 of FIG. 7.

Referring to FIGS. 11 and 12, the vent notch 121 may be spaced apart from the center of the electrode terminal 30 connected to the through hole H formed in the closed portion of the battery can 10 and formed to have a ring shape along the circumferential direction. That is, the ring-shaped vent notch 121 is continuously formed along the circumference of the closed portion of the battery can 10, so that fracture may be evenly distributed rather than concentrated at a single point when internal pressure rises.

This reduces stress concentration at specific points and allows fracture to be made in a more predictable and stable manner. Additionally, fracture proceeds more quickly and smoothly, which may allow internal gas to be quickly discharged to the outside.

Additionally, the vent notch 121 may be provided in any closed loop shape along the circumferential direction even if it is not a ring shape with a constant radius. This allows the vent notch 121 to be fractured as intended by design, thereby simultaneously improving the durability and stability of the battery cell 1.

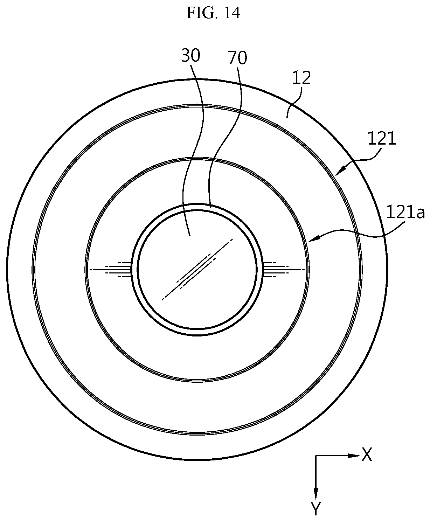

FIG. 13 is a view for describing a vent notch 121 formed in a closed portion of a battery can 10 of a battery cell 1 according to another embodiment of the present disclosure, and FIG. 14 is a top view schematically showing the vent notch 121 of FIG. 13.

Referring to FIGS. 13 and 14, in the battery cell 1 according to the present embodiment, a plurality of vent notches 121, 121a may be formed radially outward from the center of the closed portion of the battery can 10. This may prevent stress caused by abnormal pressure inside the battery can 10 from being concentrated on one vent notch 121 to cause excessive deformation or fracture at a specific point. That is, the plurality of vent notches 121, 121a formed at various positions react independently, which may evenly disperse the pressure at the fracture location, thereby reducing the vulnerability of the battery cell 1 and improving the structural strength thereof.

The plurality of vent notches 121, 121a may be formed to have various shapes or patterns, and are not limited to the shapes of the vent notches 121, 121a illustrated in FIGS. 7 to 13. That is, the plurality of vent notches 121, 121a may each have different depths or patterns along the winding axis direction Z.

For example, one vent notch 121 may have an upper notch 1211 and a lower notch 1212 having a closed loop shape, while the other vent notch 121a may be formed solely of an upper notch 1211 having a closed loop shape. The plurality of vent notches 121, 121a having different depths and patterns along the winding axis direction Z may disperse stress in various ways when internal pressure rises, thereby inducing fracture first at a specific position of the battery can 10. As a result, internal gas may be gradually discharged to the outside, and pressure may be safely relieved without sudden fracture or explosion of the battery can 10. Additionally, the independent structure of each of the vent notches 121, 121a may reduce the vulnerability of the battery cell 1 and improve the overall durability, thereby further enhancing the safety of the battery cell 1.

Therefore, the battery cell 1 according to the present embodiment may prevent excessive deformation or fracture at a specific part by including a plurality of vent notches 121, 121a. Additionally, by including a plurality of vent notches 121, 121a with different depths and patterns along the winding axis direction Z, the order or degree of fracture in the event of abnormal conditions may be controlled, which may play an important role in maximizing the safety of the battery cell 1 and preventing unexpected explosion.

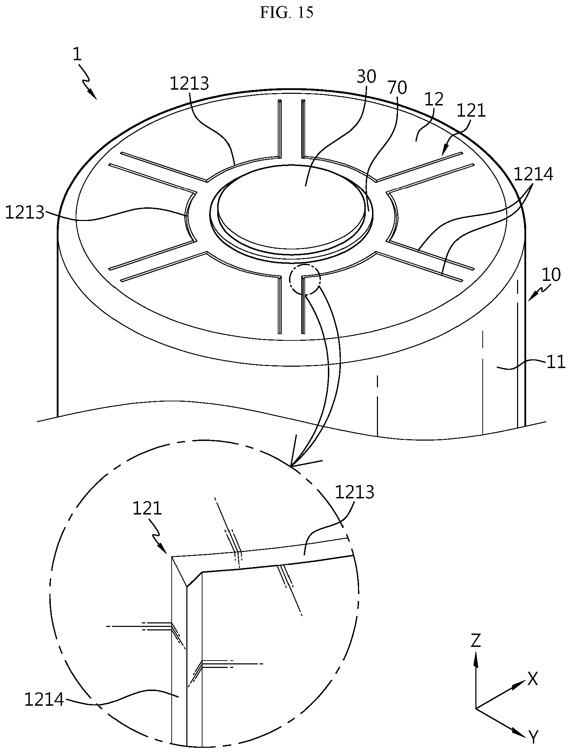

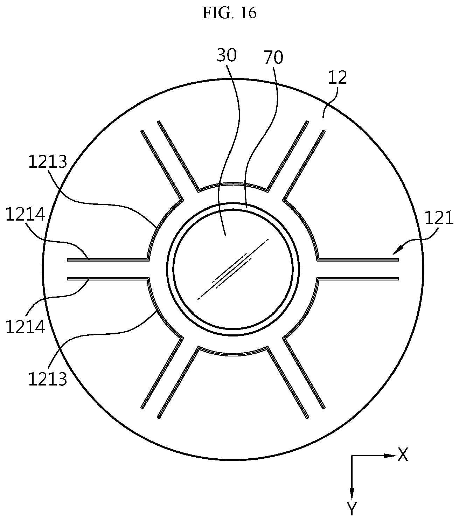

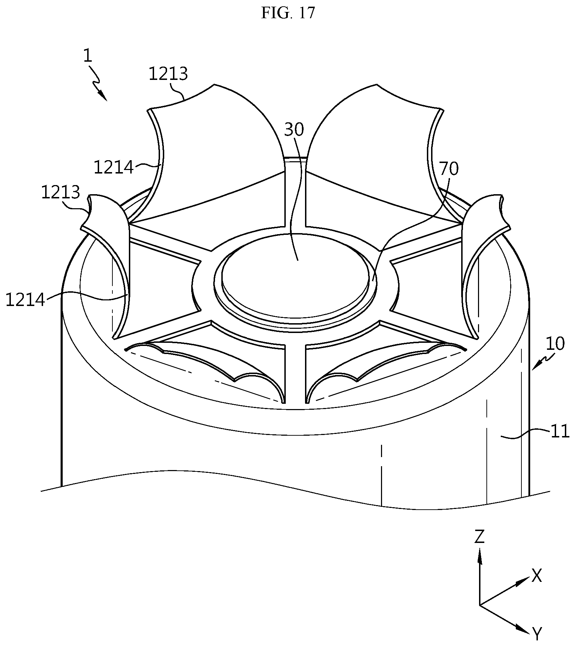

FIG. 15 is a view for describing a vent notch 121 formed in a closed portion of a battery can 10 of a battery cell 1 according to still another embodiment of the present disclosure, FIG. 16 is a top view schematically showing the vent notch 121 of FIG. 15, and FIG. 17 is a view for describing a state in which the vent notch 121 of FIG. 15 is fractured.

Referring to FIGS. 15 to 17, in the battery cell 1 according to the present embodiment, the vent notch 121 may include a plurality of curved portions 1213 and a plurality of linear portions 1214.

The curved portion 1213 constitutes a portion of the vent notch 121 formed near the through hole H of the closed portion of the battery can 10, and may be designed to be selectively fractured in response to abnormal pressure generated inside the battery cell 1. The curved portion 1213 may be disposed to surround the outer periphery or vicinity of the electrode terminal 30 along the circumferential direction, and may be formed continuously or discontinuously along at least a portion of the circumference of the electrode terminal 30. Thus, when the internal pressure of the battery cell 1 increases, stress may be locally concentrated to induce fracture at a specific position.

The linear portion 1214 may be interconnected with each of the curved portions 1213 and may be disposed radially along the circumference based on the center of the electrode terminal 30. Such a radial structure may be uniformly formed on the closed portion of the battery can 10. Thus, when the internal pressure of the battery cell 1 exceeds a certain threshold, the vent notch 121 may be configured to be fractured along the corresponding radial structure. This radial arrangement ensures uniform fracture of the closed portion of the battery can 10 by evenly dispersing stress during fracture, and allows the abnormal pressure to be quickly relieved.

Thus, even under abnormal pressure conditions inside the battery cell 1, at least a portion of the closed portion of the battery can 10 may be safely fractured, thereby minimizing secondary damage. Additionally, this structure may maintain a state in which the fractured member is not completely removed, and at least a part of the closed portion of the battery can 10 is radially fractured and folded to the outside, thereby maintaining a smooth gas discharge path.

In addition, the vent notch 121 according to the present embodiment described with reference to FIGS. 15 to 17 may also have various shapes or patterns, and recessed depths, similar to the vent notch 121 according to the embodiment described above with reference to FIGS. 7 to 14, and redundant descriptions will be omitted below.

Therefore, the battery cell 1 according to the present embodiment may maximize the flexibility of fracture control and the efficiency of pressure relief. Additionally, it may optimize the flow of discharged gas to accelerate the process of reducing internal pressure and ensure safe operation of the battery cell 1 without degrading the performance thereof.

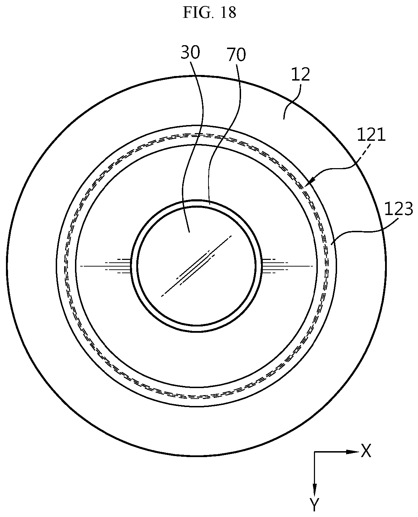

FIG. 18 schematically shows a protective member 123 of the vent notch 121 of the battery can 10 of the battery cell 1 according to an embodiment of the present disclosure.

The vent notch 121 is a fracture portion configured to be fractured by abnormal internal pressure of the battery cell 1, and may further include a protective member 123 to enhance the functional reliability thereof.

The protective member 123 may be disposed to cover or enclose the vent notch 121 region or the vicinity thereof, and may perform a protective function so that the vent notch 121 is selectively fractured only under abnormal pressure conditions. This may prevent unnecessary fracture or deformation of the vent notch 121 or the periphery thereof due to external impacts or environmental factors.

The protective member 123 may be made of a highly durable material such as a polymer material, and may provide strength and heat resistance suitable for the internal and external environments of the battery can 10. Additionally, the protective member 123 may be designed such that the vent notch 121 is normally fractured when the internal pressure of the battery cell 1 reaches a specific threshold so as not to impair the fracture characteristics of the vent notch 121. For example, the protective member 123 may not interfere with the deformation of the vent notch 121 during fracture, and may allow the stress concentrated around the vent notch 121 to be effectively transmitted to the predictable fracture location.

In addition, the protective member 123 may also serve to prevent the scattering of foreign substances that may occur during fracture. When the vent notch 121 is fractured, the discharge of debris and other foreign substances to the outside may be controlled, thereby minimizing damage to surrounding components. The protective member 123 may improve the long-term stability and reliability of the battery cell 1 and enhance safety within the battery system.

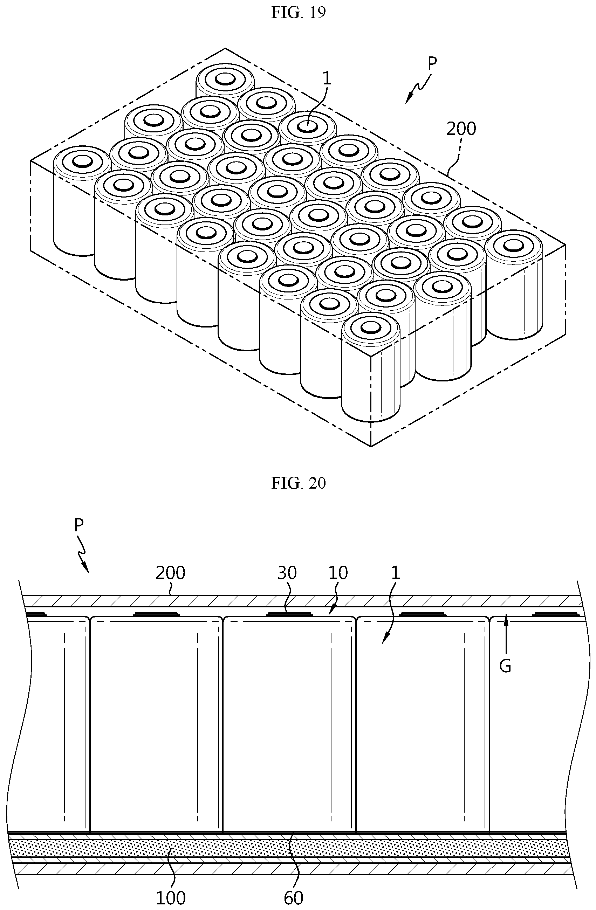

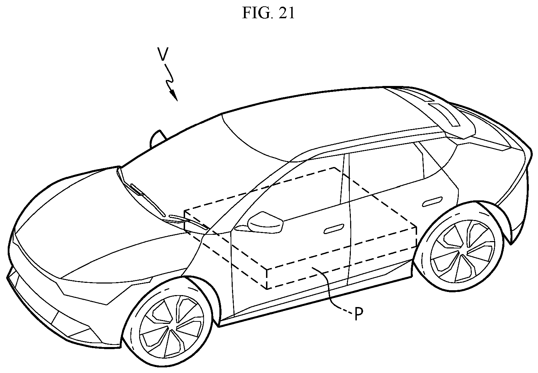

FIG. 19 is a view schematically showing a battery pack P including a battery cell 1 according to an embodiment of the present disclosure, FIG. 20 is a view for describing a battery cell 1 cooling method of the battery pack P of FIG. 19, and FIG. 21 is a view schematically showing a vehicle V including the battery pack P according to an embodiment of the present disclosure.

A battery pack P according to an embodiment of the present disclosure may further include various other components of the battery pack known at the time of filing of the present disclosure. For example, the battery pack P according to an embodiment of the present disclosure may further include components such as a current sensor, a fuse, and a service plug.

Referring to FIGS. 19 and 20, the battery pack P may include a pack housing 200 configured to accommodate at least one battery cell 1 described above and a cooling pad 100 configured to dissipate heat from the battery cell 1 within the pack housing 200.

As described above, the battery cell 1 may be designed to use a bottom cooling structure for efficient heat dissipation downward. Accordingly, the battery pack P may include the cooling pad 100 at the bottom portion where the battery cells 1 are disposed, in other words, on the side of the cap 60. This allows heat generated from the battery cell 1 to be dissipated downward, thereby preventing overheating inside the battery cell 1.

The battery pack P may be designed to be in close contact with the bottom portion of the battery cell 1 using a material having high thermal conductivity and flexibility. Thus, heat generated from the battery cell 1 may be rapidly transferred through the cooling pad 100, and the thermal management efficiency of the battery pack P may be maximized by dispersing the heat.

Additionally, the cooling pad 100 may be connected to the cooling flow path, and thus the cooling fluid circulates along the heat transfer surface of the cooling pad 100, thereby enabling more efficient heat dissipation. This structure maintains the stability of the battery pack P even in high-output or high-temperature environments, and may contribute to optimizing the thermal characteristics of the battery cell 1. In addition, since the selection of the thickness and material of the cooling pad 100 may affect the total weight of the battery pack P, the battery pack P may be designed to exhibit effective cooling performance while minimizing weight through a lightweight structure.

Therefore, the battery pack P according to the present embodiment may construct an efficient heat dissipation system for the battery cell 1 by using the cooling pad 100 disposed at the bottom of the battery cell 1. In addition, in the battery pack P, the cooling pad 100 is disposed on the opposite side of the portion where the vent notch 121 of the battery cell 1 is positioned. Therefore, the battery pack P may stably secure an internal gas G discharge path for preventing thermal runaway of the battery cell 1 by using the vent notch 121 formed at the top of the battery cell 1. In this way, while maximizing cooling performance using the bottom cooling method, the gas G discharge from the vent notch 121 is not blocked by the cooling pad 100 or the like to allow for smooth venting, thereby effectively reducing the internal pressure of the battery cell 1.

Additionally, referring to FIG. 21, a vehicle V according to an embodiment of the present disclosure may include one or more battery packs P according to the present disclosure. And, the vehicle V according to an embodiment of the present disclosure may further include various other components included in the vehicle in addition to the battery pack P. For example, the vehicle V according to an embodiment of the present disclosure may further include a vehicle body, a motor, a control device such as an electronic control unit (ECU), and the like in addition to the battery pack P according to an embodiment of the present disclosure.

Additionally, the battery pack P according to an embodiment of the present disclosure may be applied as various types of energy storage devices or power sources, and it is obvious that the battery pack P may be provided in other devices, apparatuses, and facilities, such as an energy storage system using secondary batteries, in addition to the vehicle V.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [Explanation of Reference Signs]

1: Battery cell
10: Battery can
11: Side wall member
12: Bottom member (closed portion)
12a: First surface
12b: Second surface
121, 121a: Vent notch
1211: Upper notch
1212: Lower notch
1213: Curved portion
1214: Linear portion
122: Plating layer
123: Protective member
20: Electrode assembly
21: First electrode
22: Second electrode
23: Metal foil
24: Coated portion
26: Uncoated portion
27: Notching tab
28: Separator
30: Electrode terminal
40: First current collector plate
50: Second current collector plate
60: Cap
70: Gasket
100: Cooling pad
200: Pack housing
H: Through hole
W: Welded portion
G: Gas
P: Battery pack
V: Vehicle

## Claims

1. A battery cell comprising:
an electrode assembly in which a first electrode, a second electrode, and a separator interposed therebetween are wound around a winding axis;
a battery can accommodating the electrode assembly through an opening formed on one side, having a closed portion formed on the other side, and electrically connected to the second electrode;
an electrode terminal electrically connected to the first electrode through a through hole formed in the closed portion of the battery can; and
a cap covering the opening of the battery can,
wherein the closed portion of the battery can has a vent notch with a fracture structure.

2. The battery cell according to claim 1,
wherein the opening of the battery can is welded together with an edge of the cap.

3. The battery cell according to claim 1,
wherein the cap is inserted into the battery can in the length direction from the opening of the battery can and welded together with a side surface of the battery can.

4. The battery cell according to claim 1,
wherein the closed portion of the battery can comprises:
a first surface disposed toward the outside of the battery can; and
a second surface disposed toward the inside of the battery can, and
wherein the vent notch comprises an upper notch formed concavely by being recessed inward in the thickness direction of the closed portion of the battery can from the first surface and a lower notch formed concavely by being recessed inward in the thickness direction of the closed portion of the battery can from the second surface.

5. The battery cell according to claim 4,
wherein in the vent notch, the upper notch and the lower notch have recessed depths that are different from each other.

6. The battery cell according to claim 4,
wherein the closed portion of the battery can comprises a plating layer on at least the second surface, and
wherein the thickness of the plating layer is greater than the recessed depth of the lower notch.

7. The battery cell according to claim 1,
wherein the vent notch is recessed to have a stepped structure inward in the thickness direction of the closed portion of the battery can, and
wherein in the stepped structure, the size of the recessed area exposed to the outside along the recessed depth direction gradually decreases.

8. The battery cell according to claim 1,
wherein the vent notch is provided in a closed loop shape.

9. The battery cell according to claim 8,
wherein the vent notches are formed in plurality radially outward from the center of the opening of the battery can.

10. The battery cell according to claim 9,
wherein each of the plurality of vent notches has a different depth or pattern.

11. The battery cell according to claim 1,
wherein the vent notch comprises:
a plurality of curved portions formed along at least a portion of the circumference of the electrode terminal; and
a plurality of linear portions respectively connected to the plurality of curved portions and formed radially from the center of the opening of the battery can.

12. The battery cell according to claim 1,
wherein the vent notch comprises a protective member.

13. A battery pack comprising a battery cell according to any one of claims 1 to 12.

14. The battery pack according to claim 13,
wherein a cooling pad is disposed on the opposite side of a portion where the vent notch of the battery cell is positioned.

15. A vehicle equipped with at least one battery pack according to claim 14.
